# EUROPEAN PATENT SPECIFICATION

(11) **EP 2 034 546 B1**
(45) Date of publication and mention of the grant of the patent: **19.09.2012**
(21) Application number: 07743553.5
(22) Date of filing: 17.05.2007
(51) Int. Cl.: H01M 8/02, H01B 1/06, H01B 13/00, H01M 8/10

(54) **ION CONDUCTOR**
IONENLEITER
CONDUCTEUR D'IONS

(30) Priority: 22.05.2006 JP 2006141503; 17.04.2007 JP 2007108143
(43) Date of publication of application: 11.03.2009
(73) Proprietor: Nissan Motor Co., Ltd., Kanagawa 221-0023 (JP); Tokyo Metropolitan University, Shinjuku-ku Tokyo 163-8001 (JP)
(72) Inventor: OGAWA, Hiroshi c/o NISSAN MOTOR CO.,LTD.,, Kanagawa 243-0123 (JP); TAKEKAWA, Toshihiro c/o NISSAN MOTOR CO.,LTD.,, Kanagawa 243-0123 (JP); KANAMURA, Kiyoshi, Tokyo 192-0397 (JP)
(74) Representative: Schaeberle, Steffen
(86) International application number: PCT/JP2007/060118
(87) International publication number: WO 2007/135944

(56) References cited:
- WO-A1-03/102971
- JP-A- 2005 332 801
- JP-A- 2006 120 409
- JP-A- 2007 115 647
- US-A1- 2004 038 105
- US-A1- 2005 106 440
- US-A1- 2006 083 962

## Description

### TECHNICAL FIELD

The present invention relates to an ion conductor. Specifically, the present invention relates to a composite electrolyte membrane composed of an inorganic porous film holding an electrolyte material in fine pores thereof, and relates to the ion conductor in which the electrolyte material can be improved in ion conductivity when compared with an ionic liquid by itself. Also, the present invention relates to an energy device and a fuel cell using such an ion conductor.

### BACKGROUND ART

There has been proposed a cation-conductive or proton-conductive ceramic film impregnated with an ionic liquid as an electrolyte membrane for fuel cells (refer to Japanese Patent Translation Publication No. 2004-515351). This film is obtained by being reformed so as to show ion conductivity and treated with the ionic liquid based on a porous and soft ceramic film described in PCT/EP98/05939.

### DISCLOSURE OF INVENTION

However, the conventional electrolyte membrane combined with such a ceramic film and an ionic liquid has had a problem that the ion conductivity is not improved when compared with that of the ionic liquid by itself (in its own value).

The present invention has been made in order to solve the problem concerning the conventional electrolyte membrane combined with the ceramic film and the ionic liquid. It is an object of the present invention to provide an ion conductor, of which the ion conductivity is improved when compared with that of an ionic liquid by itself, having high heat resistance, capable of suppressing swelling during water absorption and being produced at low cost, and further to provide an energy device using such an ion conductor, for instance, a fuel cell.

The first aspect of the present invention provides an ion conductor of the present invention includes: an inorganic porous film which includes multiple fine pores of which surfaces are bonded to multiple proton-donor functional groups; and an electrolyte material which is held in the fine pores of the inorganic porous film, and includes a cation component and an anion component.

The second aspect of the present invention provides a method of producing the ion conductor includes: mixing and agitating an inorganic sol, polymer particles, and a solvent; filtering a mixed liquid including the inorganic sol, the polymer particles, and the solvent to fabricate a membrane including the inorganic sol and the polymer particles; removing an extra solvent contained in the membrane formed by filtering, followed by drying the membrane; firing the dried membrane and removing the polymer particles to form an inorganic porous film; chemically modifying to introduce proton-donor functional groups onto surfaces of fine pores of the inorganic porous film; and impregnating the fine pores of the inorganic porous film introduced the proton-donor functional groups with an electrolyte material, followed by drying the inorganic porous film.

### BRIEF DESCRIPTION OF DRAWINGS

[Fig. 1] FIG. 1 shows a structure of an ion conductor of an embodiment of the present invention, (a) is a schematic view showing a cross section of the ion conductor, and (b) is a SEM picture of an inorganic porous film.
[Fig. 2] FIG. 2 is an example of a flowchart showing a fabrication procedure of the ion conductor of the embodiment of the present invention.
[Fig. 3] FIG. 3 shows a reaction mechanism in a chemically modifying process of the inorganic porous film.
[Fig. 4] FIG. 4 is a graph showing an example of IR spectra in order to determine whether a silanol group is introduced into the inorganic porous film or not.
[Fig. 5] FIG. 5 is a graph showing an example of EDS spectra in order to determine whether a sulfonic acid group is introduced into the inorganic porous film or not.
[Fig. 6] FIG. 6 is a SEM picture showing a cross section of the ion conductor of the embodiment of the present invention.
[Fig. 7] FIG. 7 is a graph showing an ion conductivity variation with respect to a temperature of the ion conductor using BMImTFSI as an ionic liquid, compared to a comparative example using an unmodified porous film.
[Fig. 8] FIG. 8 is a graph showing an ion conductivity variation with respect to a temperature of the ion conductor using PP13TFSI, compared to a comparative example using an unmodified porous film.
[Fig. 9] FIG. 9 is a graph showing an ion conductivity variation with respect to a temperature of the ion conductor using TMPATFSI, compared to a comparative example using an unmodified porous film.
[Fig. 10] FIG. 10 is a graph showing an ion conductivity variation with respect to a temperature of the ion conductor using DEMETFSI, compared to a comparative example using an unmodified porous film.
[Fig. 11] FIG. 11 is a graph showing an ion conductivity variation with respect to a temperature of the ion conductor using DEMEBF₄, compared to a comparative example using an unmodified porous film.
[Fig. 12] FIG. 12 is a graph showing ion conductivity of the ion conductor of the embodiment of the present invention compared to a comparative example using an unmodified porous film.
[Fig. 13] FIG. 13 is a schematic view showing a cross section of an example of a structure of a fuel cell applying the ion conductor of the embodiment of the present invention.

### BEST MODE FOR CARRYING OUT THE INVENTION

A description will be made below in detail of an ion conductor of an embodiment of the present invention. Note that, in this description, "%" represents a mass percentage unless otherwise specified.

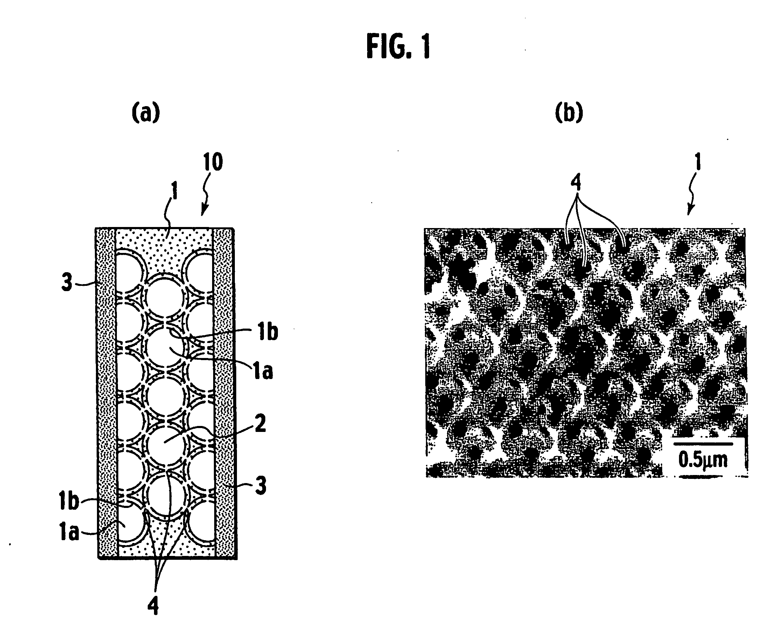

FIG. 1 is a schematic view showing a structure of an ion conductor of the embodiment of the present invention. The ion conductor 10 of the embodiment of the present invention, as shown in FIG 1(a), is composed of an inorganic porous film 1, and an electrolyte material 2 held in numerous fine pores 1a provided in the inorganic porous film 1. FIG 1(b) is an electronic microscope picture showing a structure of the inorganic porous film 1. Numerals 3 in FIG 1(a) are electrodes provided on both sides of the ion conductor if required.

The ion conductor of the embodiment of the present invention is composed of the inorganic porous film 1, and the electrolyte material 2 held in the fine pores 1a of the inorganic porous film 1, in which the inorganic porous film 1 includes proton-donor functional groups on surfaces 1b of the fine pores 1a thereof. The electrolyte material 2 includes a cation component and an anion component.

Then, the electrolyte material 2 and the inorganic porous film 1 interact at the interface by impregnating the inorganic porous film 1 with the electrolyte material 2, in which the inorganic porous film 1 is chemically modified by the proton-donor functional groups. A secondary effect of this interaction enables the ion conductivity of the ion conductor kept the electrolyte material immobilized to be higher than that of the ion conductor of which the electrolyte material is liquid. Thus, it is possible to accomplish immobilization of the electrolyte material and improvement of the ion conductivity at once. In addition, it is possible to obtain the ion conductor more suitable for popularizing at low cost because the electrolyte material 2 can be made with lower-cost materials compared to a conventional fluoric electrolyte.

It is preferable to use an ionic liquid as the electrolyte material 2 in perspective of excellent stability to heat (nonvolatile, extremely low vapor pressure, being liquid over a wide range of temperature), high ion density, large heat capacity and the like.

The ionic liquid represents room-temperature molten salt composed of a molecular (polyatomic) cation component and a molecular anion component. As the cation component in the typical ionic liquid, there are mentioned: imidazolium derivatives, 1 to 3 substitutes, which are shown in the following Chemical formulas 1 to 3, pyridinium derivatives shown in Chemical formula 4; pyrrolidinium derivatives shown in Chemical formula 5; ammonium derivatives shown in Chemical formula 6; phosphonium derivatives shown in Chemical formula 7; guanidinium derivatives shown in Chemical formulas 8 to 12; isouronium derivatives shown in Chemical formulas 13 to 15; and the like.

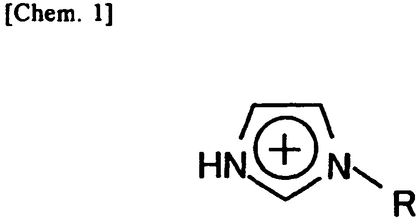

R in the formula 1 includes a monovalent organic group, preferably a monovalent hydrocarbon group, more preferably an alkyl group or an arylalkyl group, of which carbon number is 1 to 20. Particularly, there are mentioned: a methyl group, an ethyl group, a propyl group, a butyl group, a pentyl group, a hexyl group, an octyl group, a decyl group, a hexadecyl group, dodecyl group, a tetradecyl group, a hexadecyl group, an octadecyl group, a benzyl group, a γ-phenylpropyl, and the like.

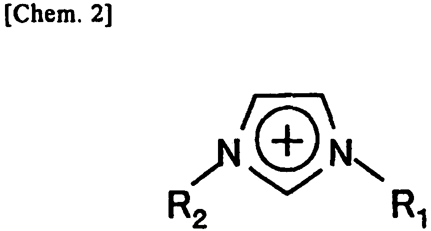

R₁ and R₂ in the formula 2 may be same or different, and include a monovalent organic group, preferably a monovalent hydrocarbon group, more preferably an alkyl group or an arylalkyl group, of which carbon number is 1 to 20. Particularly, there are mentioned: a methyl group, an ethyl group, a propyl group, a butyl group, a pentyl group, a hexyl group, an octyl group, a decyl group, a hexadecyl group, dodecyl group, a tetradecyl group, a hexadecyl group, an octadecyl group, a benzyl group, a γ-phenylpropyl, and the like.

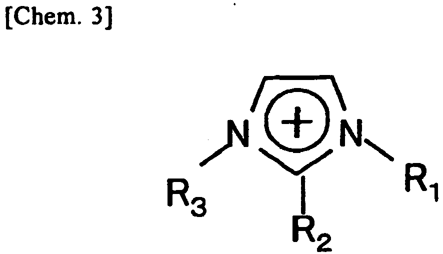

R₁, R₂ and R₃ in the formula 3 may be same or different, and include a monovalent organic group, preferably a monovalent hydrocarbon group, more preferably an alkyl group or an arylalkyl group, of which carbon number is 1 to 20. Particularly, there are mentioned: a methyl group, an ethyl group, a propyl group, a butyl group, a pentyl group, a hexyl group, an octyl group, a decyl group, a hexadecyl group, dodecyl group, a tetradecyl group, a hexadecyl group, an octadecyl group, a benzyl group, a γ-phenylpropyl, and the like.

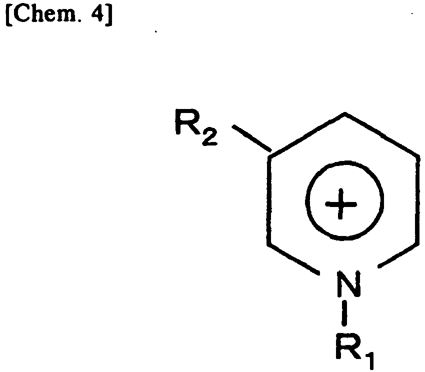

R₁ and R₂ in the formula 4 may be same or different, and include hydrogen or a monovalent organic group, preferably a monovalent hydrocarbon group, more preferably an alkyl group or an arylalkyl group, of which carbon number is 1 to 20. Particularly, there are mentioned: hydrogen, a methyl group, an ethyl group, a propyl group, a butyl group, a pentyl group, a hexyl group, an octyl group, a decyl group, a hexadecyl group, dodecyl group, a tetradecyl group, a hexadecyl group, an octadecyl group, a benzyl group, a γ-phenylpropyl, and the like.

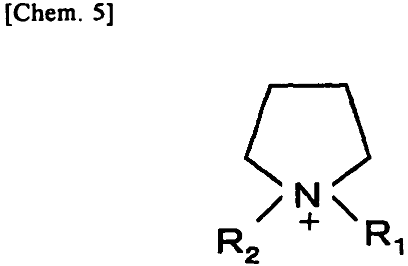

R₁ and R₂ in the formula 5 may be same or different, and include hydrogen or a monovalent organic group, preferably a monovalent hydrocarbon group, more preferably an alkyl group or an arylalkyl group, of which carbon number is 1 to 20. Particularly, there are mentioned: hydrogen, a methyl group, an ethyl group, a propyl group, a butyl group, a pentyl group, a hexyl group, an octyl group, a decyl group, a hexadecyl group, dodecyl group, a tetradecyl group, a hexadecyl group, an octadecyl group, a benzyl group, a γ-phenylpropyl, and the like.

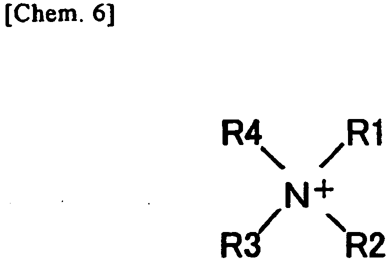

R₁, R₂, R₃ and R₄ in the formula 6 may be same or different, and include hydrogen or a monovalent organic group, preferably a monovalent hydrocarbon group, more preferably an alkyl group or an arylalkyl group, of which carbon number is 1 to 20. Particularly, there are mentioned: hydrogen, a methyl group, an ethyl group, a propyl group, a butyl group, a pentyl group, a hexyl group, an octyl group, a decyl group, a hexadecyl group, dodecyl group, a tetradecyl group, a hexadecyl group, an octadecyl group, a benzyl group, a γ-phenylpropyl, and the like.

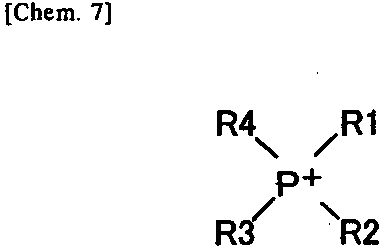

R₁, R₂, R₃ and R₄ in the formula 7 may be same or different, and include hydrogen or a monovalent organic group, preferably a monovalent hydrocarbon group, more preferably an alkyl group or an arylalkyl group, of which carbon number is 1 to 20. Particularly, there are mentioned: hydrogen, a methyl group, an ethyl group, a propyl group, a butyl group, a pentyl group, a hexyl group, an octyl group, a decyl group, a hexadecyl group, dodecyl group, a tetradecyl group, a hexadecyl group, an octadecyl group, a benzyl group, a γ-phenylpropyl, and the like.

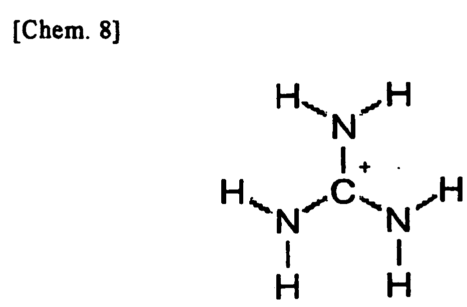

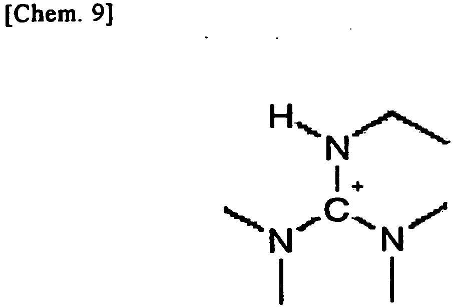

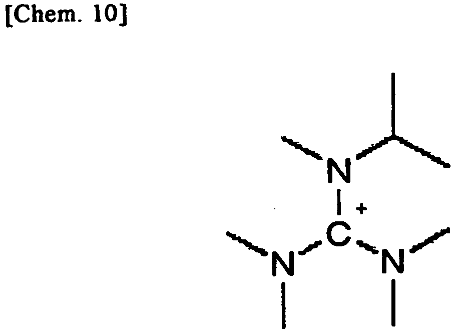

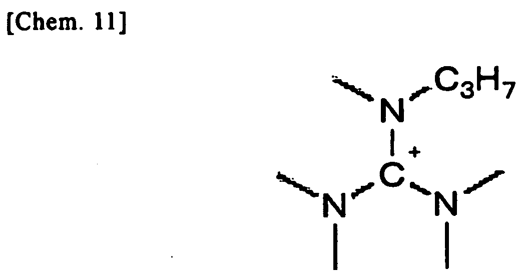

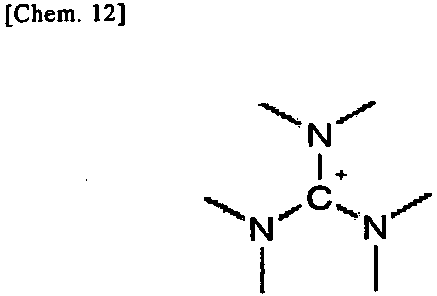

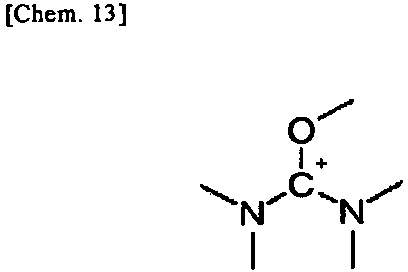

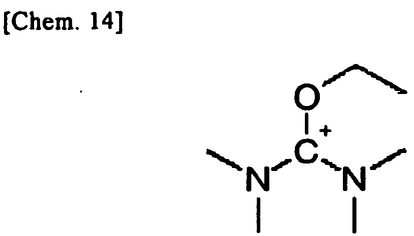

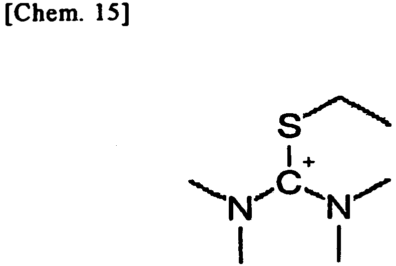

As the anion component, there are mentioned: halogenides shown in the following Chemical formula 16; sulfates and sulfonates shown in Chemical formulas 17 and 18; amides and imides shown in Chemical formula 19; methanes shown in chemical formula 20; borates shown in chemical formulas 21 to 26; phosphates and antimonates shown in Chemical formulas 27 and 28; and other salts shown in Chemical formula. 29; and the like.

Cl⁻ Br⁻ I⁻ [Chem. 16]

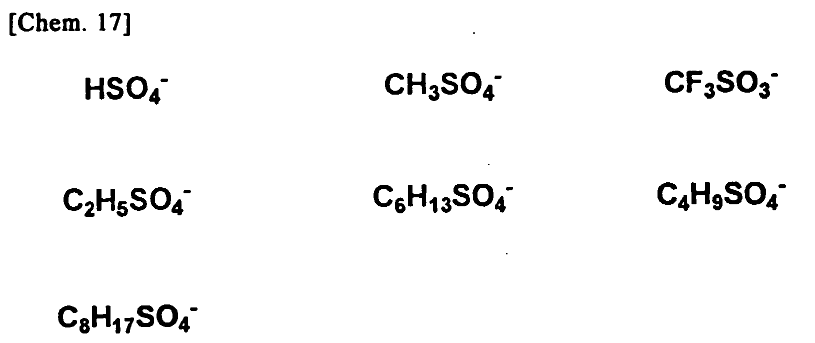

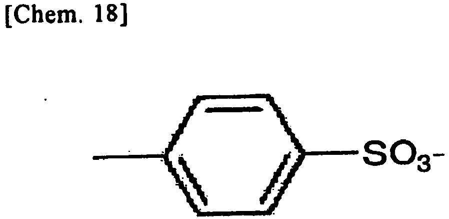

(CN)₂N- [N(CF₃)₂]- [N(SO₂CF₃)₂]- [Chem. 19]

[HC(SO₂CF₃)₂]- C(SO₂CF₃)₃⁻ [Chem. 20]

BF₄- B(CN)₄- [Chem. 21]

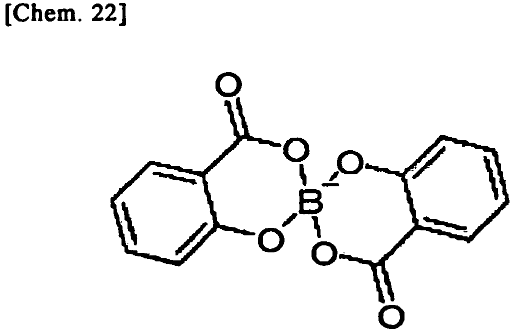

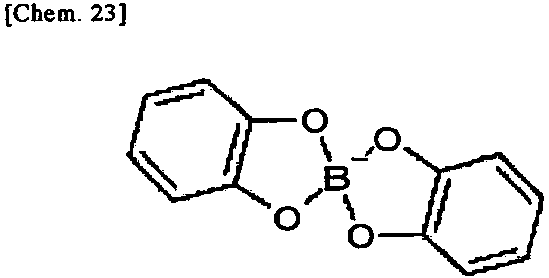

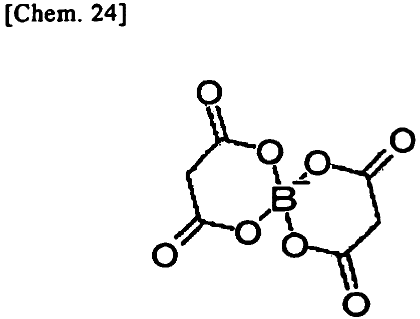

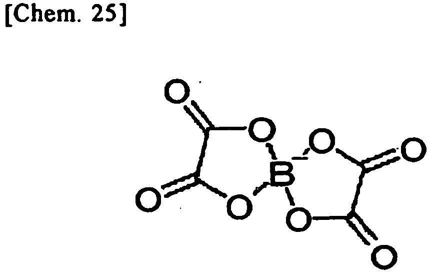

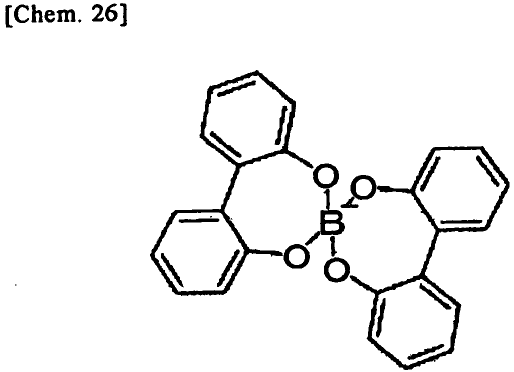

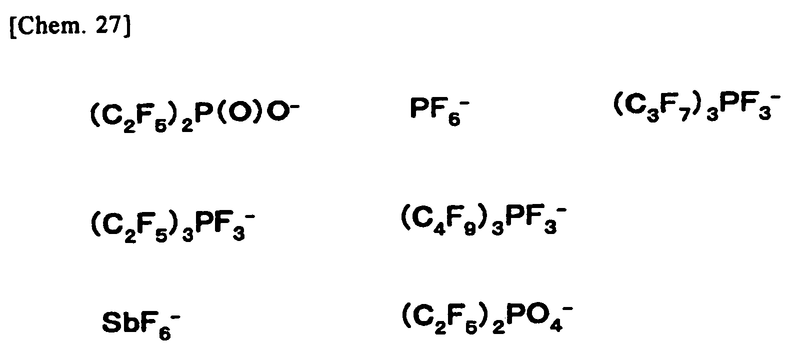

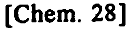

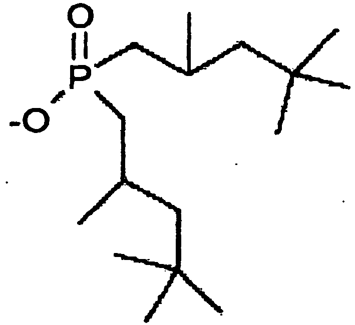

C₁₀H₂₁COO⁻ CF₃COO⁻ Co(CO)₄⁻ [Chem. 29]

Note that each of the above-described cation components and anion components can be used singly, or two or more thereof can be appropriately combined for use.

While, it is preferable that the inorganic porous film includes, for example, alumina (Al₂O₃), silica (SiO₂), titania (TiO₂) or zirconia (ZrO₂), or a metal oxide that is an arbitrary combination of these because of excellent stability and low-cost availability.

As shown in FIG. 1(a) and 1(b), it is preferable that the multiple fine pores 1a that the inorganic porous film 1 has are spherical, the spherical fine pores 1a have a substantially equal diameter, and the fine pores 1a adjacent to each other communicate with each other. In other words, it is desired that the spherical fine pores 1a three-dimensionally exist in the inorganic porous film 1, the fine pores 1a adjacent to each other communicate with each other via communicating ports 4. The electrolyte material 2 may be filled through the communicating ports 4 formed between the adjacent fine pores. Also, the inorganic porous film 1 may include the proton-donor functional groups not only on the surfaces 1b of the fine pores 1a thereof, but also on the surfaces of the communicating ports 4.

As described above, the electrolyte material 2 is regularly supported in the inorganic porous film 1 so that the both materials are compound and the ion conductivity totally increases. Moreover, in a wet state, the inorganic porous film 1 restricts swelling of the electrolyte material 2. In particular, since the spherical fine pores 1a existing in the porous film have the substantially equal diameter, when the electrolyte material 2 swells at the time of being hydrous, the porous film 1 receives uniform and dispersed swelling force, and accordingly, a local breakage of the ion conductor is restricted. In other words, the spherical fine pores 1a of the inorganic porous film 1 three-dimensionally adopt a regular array structure, and accordingly, swelling pressure of the electrolyte material 2 is uniformly applied to the inorganic porous film 1. Therefore, a breakage of the inorganic porous film 1 is prevented and it enables the electrolyte material 2 to be supported without being flowed out.

A porosity of the inorganic porous film 1 is preferably within a range from 70 to 90 % by volume. Accordingly, a large amount of the electrolyte material 2 can be introduced into the porous film 1, and can realize good ion conductivity.

Preferably, a diameter (inner diameter) of the fine pores of the inorganic porous film 1 is within a range from 20 to 1000 nm, more preferably, within a range from 50 to 500 nm. When the diameter is less than 20 nm, it tends to become difficult to form the porous film by using the spherical resin as a template as described below. When the diameter becomes 50 nm or more, it becomes easier to form the porous film, and enables the porous film to be produced stably. While, when the diameter exceeds 1000 nm, the amount of the proton-donor functional group per unit weight of the inorganic porous film is small, and accordingly, an effect to be obtained cannot be achieved. Specifically, when the diameter becomes 500 nm or less, the amount of the proton-donor functional group is radically increased, and the proton-donor functional groups tend to reliably exert a sufficient effect.

It is preferable that the inorganic porous film 1 is composed of a material that forms an inorganic sol. In this case, a low-cost inorganic sol such as alumina sol, silica sol, titania sol, zirconia sol is used, and a sol-gel method that is a simple technology for forming an porous film is applied so as to obtain the advantage of being able to reduce cost.

It is also preferable that an inorganic colloid such as colloidal alumina, colloidal silica, colloidal titania, colloidal zirconia is used as the material that forms the inorganic sol. Such an inorganic colloid is suitable for forming the inorganic porous film using polymer particles as a mold, and it is possible to easily form the spherical fine pores having the three-dimensionally regular array.

Moreover, the inorganic porous film can be obtained from, for example, a suspension formed by mixing the polymer particles and the inorganic material. By applying the suspension, a template having the three-dimensionally regular array is formed in such a manner that the polymer particles are stacked on one another. Therefore, the three-dimensional fine pores 1a, which the electrolyte material is supported, is regularly arrayed, and the inorganic porous film 1 having a high porosity, for example exceeding 70%, can be ensured. Accordingly, excellent ion conductivity can be expected. In addition, by controlling a diameter of the polymer particles and a stacked state thereof, an inorganic porous film having an arbitrary space can be designed. Note that, the polymer particles in the inorganic materials can be removed by means of a heat treatment and the like, and a space into which the electrolyte material 2 enters, i.e. the fine pore is ensured.

The surfaces of the fine pores 1a of the inorganic porous film 1 are chemically modified by the proton-donor functional groups as described above. Since a region that promotes the proton conduction is thereby formed on the interface between the fine pore surface 1b of the porous film 1 and the electrolyte material 2, it is considered that the proton conductivity is enhanced. In this case, the proton-donor functional group is preferably a Brønsted acid functional group as represented by a sulfonic acid group, a phosphoric acid group, or a carboxylic acid group. Note that the Brønsted acid represents an acid including an unshared pair of electron and being able to provide protons (hydrogen ions). As functional groups other than the above mentioned ones, a sulfamide acid group, a hydroxyl group, an acetic acid group and the like are cited.

It is preferable that a concentration of the proton-donor functional group contained in the inorganic porous film 1 is within a range from 0.01 to 2.8 mmol/g, more preferably, within a range from 0.03 to 1.2 mmol/g per unit weight of the inorganic porous film. In other words, when the concentration of the proton-donor functional group is less than 0.01 mmol/g, the effect of introducing the functional group may not be obtained substantially. While, it is difficult to contain more than 2.8 mmol/g because of the size of the fine pore diameter of the inorganic porous film.

In this case, it is preferable that an EW value of the inorganic porous film 1 modified by the proton-donor functional groups is within a range from 200 to 90000 g/mol, more preferably, 890 to 33000 g/mol. In other words, when the EW value is less than 200 g/mol, the effect of introducing the functional group may not be obtained. While, it is difficult to contain more than 90000 g/mol because of the size of the fine pore diameter of the inorganic porous film. Note that, the EW stands for the Equivalent Weight, and the EW value is defined as a weight of a dried polymer per mol of an ion exchange group, which is calculated by EW = 1000/Ar (Ar: ion exchange value (mmol/g)).

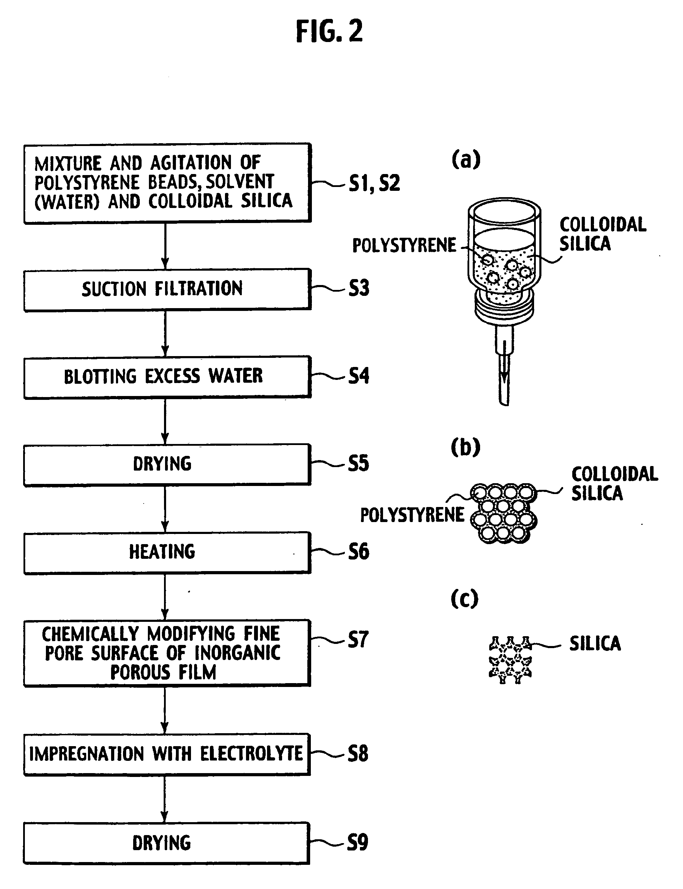

The ion conductor of the embodiment of the present invention can be produced, for example, based on the following steps as shown in FIG 2. Note that FIG. 2 shows a fabrication procedure when colloidal silica is used as an inorganic sol, and polystyrene particles are used as polymer particles.
1. Step S1 of mixing the inorganic sol and the polymer particles by using the solvent
2. Step S2 of agitating the mixed liquid
3. Step S3 of filtering the mixed liquid (suspension) to fabricate the membrane
4. Step S4 of removing extra moisture in the membrane formed by the filtering
5. Step S5 of drying the membrane
6. Step S6 of firing the membrane to form the inorganic porous film
7. Step S7 of chemically modifying to introduce the proton-donor functional groups onto the surfaces of the fine pores of the inorganic porous film
8. Step S8 of impregnating the fine pores of the inorganic porous film with the electrolyte material
9. Step S9 of drying the inorganic porous film impregnated with the electrolyte material

By being subjected to the above-described Steps S1 to S6, the inorganic porous film in which the spherical fine pores are regularly arrayed three-dimensionally is obtained while using the spherical polymer particles in a uniform particle size as the template.

In Step S1 and Step S2, the inorganic sol such as the inorganic colloid and the polymer particles are mixed into a uniform state and agitated so that the suspension of the polymer particles can be obtained.

In Step S3, the filtering is suitable as a method of filling the inorganic sol into gaps of the spherical polymer particles as the template (refer to FIG. 2(a)). The filtering can be performed while reducing pressure by about 10 to 60 kPa in consideration of the fine pores of the inorganic porous film, in other words, the size of the spherical polymer particles, the density of the fine pores and the like. As the spherical polymer particles, spherical polyethylene of which the particle size is, for example, about 20 nm to 1000 nm can be used.

In addition, as the spherical polymer particles, polyolefin resin, polystyrene resin, cross-linked acrylic resin, methylmethacrylate resin, polyamide resin and the like can be also appropriately selected. When the diameter of the polymer particles is smaller than 20 nm, it tends to become difficult to inexpensively obtain the particles of which the particle size distribution is uniform. Meanwhile, when the diameter gets larger than 1000 nm, a disturbance sometimes occurs in uniformity of the support structure constituting the inorganic porous film.

Moreover, in Step S4, the solvent contained in the membrane formed by the filtering is removed in advance so that a drying time in the subsequent drying step can be shortened. By removing the solvent, as shown in FIG. 2(b), polystyrene beads are arrayed regularly, and further, the inorganic sol is filled in the gaps of the beads concerned. In Step S5, the above-described membrane is dried in advance at room temperature so as to facilitate handling of the membrane in the firing step and so on.

Subsequently, in Step S6, by heating and firing the membrane, the inorganic material is formed and also the template resin is removed, thus the inorganic porous film can be formed (refer to FIG. 2(c)). Additionally, in Step S6, it is recommended that temporal firing for removing the template resin (polymer particles) in the membrane be performed in advance, followed by production firing of the inorganic porous film. For the temporal firing, a heat treatment can be performed for 30 minutes or more while raising the temperature to 400 to 500 °C, preferably to 430 to 470 °C, at a temperature rise rate of 1 to 10 °C/min, preferably 2 to 5 °C/min. For the production firing, for example, a heat treatment can be performed for a range of 30 to 100 minutes at 800 to 900 °C or more. The production firing may be repeated plural times. For example, in order to increase in strength, it is preferable that a relatively short-time sintering treatment at 900 °C or more is finally performed.

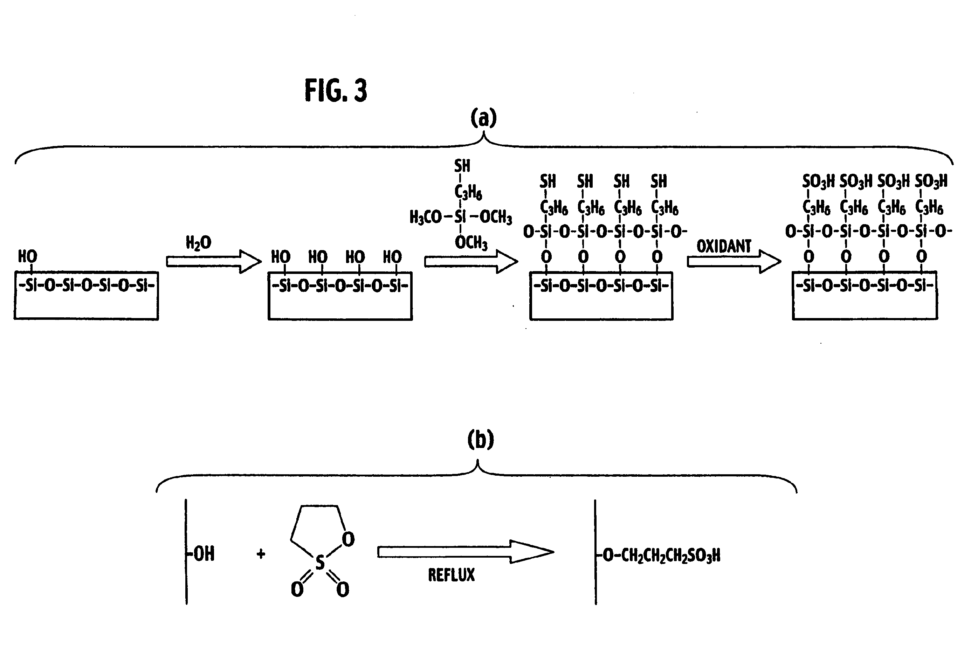

Then, in Step S7, the surfaces of the fine pores of the porous film are modified by the proton-donor functional groups. First, as shown in FIG. 3(a), the inorganic porous film obtained by the process of Step S 1 to S6 is treated with a hydrothermal treatment using an autoclave for a range of 12 to 36 hours at a range of 150 to 200 °C so as to add the hydroxyl group to the fine pore surfaces of the inorganic porous film. Next, a mercapto group (SH group) is introduced into the porous film using a silane coupling agent such as γ-Mercaptopropyltrimethoxysilane. It is preferable that about a 2 to 3.5 wt% solution of the silane coupling agent is used. Preferably, the inorganic porous film is immersed in the silane coupling agent solution for 30 minutes to 24 hours, and then, the mercapto group is introduced by means of drying the inorganic porous film in vacuum at 100 °C for 10 minutes. Thereafter, the mercapto group is oxidized using about a 10 % solution of hydrogen peroxide to form the sulfonic acid group (SO₃H group), which is a kind of the proton-donor functional group.

An alternative is shown in FIG. 3(b). Specifically, the inorganic porous film subjected to the hydrothermal treatment and added the hydroxyl group is impregnated with a toluene solution including 1,3-propanesultone and flowed back at a range of 80 to 150 °C for 24 hours. Here, the toluene solution is adjusted to a range of 3 to 7% concentration. By this method, it is possible to introduce the sulfonic acid group into the fine pore surfaces of the inorganic porous film by a single-step reaction without a complex process.

Thus, it is possible to increase the amount of the functional group contained in the ion conductor by means of increasing the amount of the proton-donor functional group per unit surface area of the inorganic porous film. Further, it is possible to increase the amount of the functional group contained in the ion conductor by means of increasing the fine pore surface area per unit film weight.

In Step S8 and S9, the intended ion conductor can be obtained by impregnating the inorganic porous film with the electrolyte material, filling the electrolyte material into the fine pores, and drying the inorganic porous film. At the impregnation of the electrolyte material, for example, an electrolyte may be dropped onto the porous film, and then vacuumed for about 20 minutes.

The above-described ion conductor is applied to energy devices related to the embodiment of the present invention. In this case, it is possible to be arbitrarily systemized with a combination of other controlling methods. The representative energy devices include a fuel cell (cell or stack), a water electrolysis device, a hydrohalic acid electrolysis device, a brine electrolysis device, an oxygen condenser, a humidity sensor, a gas sensor and the like. High ion conductivity of the ion conductor can bring better performance of each energy device.

Particularly, the fuel cell (single cell or stack) and a system thereof applied the ion conductor of the embodiment of the present invention enables the operation at the middle temperature range (approximately 120 °C). Therefore, it is possible to lower a load of a radiator compared to a conventional PEM fuel cell, and reduce size of the radiator. As a result, it is possible to decrease the system volume and reduce the weight of the system.
Furthermore, it is possible to lower the activation energy by applying the ion conductor of the embodiment of the present invention, and therefore, performance at a low temperature operation is improved because of the better ion conductivity at the low temperature. In other words, the high ion conductivity under the low temperature condition at the system start and the like can be obtained so as to improve starting performance.

This embodiment is described below further in detail by examples and comparative examples. However, this embodiment is not limited to these examples.

### (Example 1)

### 1. Fabrication of inorganic porous film

As a raw material for the inorganic porous film, colloidal silica with a diameter of 70 to 100 nm was prepared. Also, in order to control the fine pore diameter of the inorganic porous film, polystyrene spherical particles with a mean diameter of approximately 500 nm were prepared.

The colloidal silica and the polystyrene spherical particles were mixed and prepared so that the porous film could have a predetermined film thickness when being formed with regard to a volume of a solute contained in the suspension. As for the procedure, first, the polystyrene spherical particles were weighed so as to be 10 %, and added to water to make a solution. Thereafter, the colloidal silica was weighed so as to be 40 %, and added to the solution. Then, ultrasonic agitation was performed for the liquid thus obtained, and the suspension in which the particles were uniformly dispersed was obtained.

Subsequently, a membrane filter was set on a filter holder, and pressure therein was reduced so as to be 10 kPa to the atmospheric pressure by using a manual vacuum pump, and then, the suspension was filtered.

After the suspension was filtered entirely, the extra moisture contained in the membrane formed by the filtering was removed by using an absorbent material such as a filter paper, and the suspension was sufficiently dried at the room temperature. Then, by peeling from the membrane filter, the membrane composed of a mixture of the colloidal silica and the polystyrene spherical particles was obtained.

The mixture membrane thus obtained was subjected to a heat treatment in the following manner to obtain the porous film composed of silica. First, the temperature was raised to 400 to 500 °C at a temperature rise rate of 1 to 10 °C/min as a temporary firing, and the temporary firing was performed for 30 minutes at the raised temperature so as to remove the polystyrene spherical particles.

After the temporal firing, a heat treatment was performed for about 60 minutes at 890 °C in order to sinter the colloidal silica. Furthermore, in order to enhance mechanical strength of the membrane concerned, a heat treatment was performed for 15 minutes at a temperature of 980 °C, and the temperature was returned to the room temperature slowly. In such a way, the silica porous membrane of which the particle size is 500 nm and the porosity is 74 % was obtained.

### 2. Modification of surfaces of silica porous membrane

The silica porous membrane thus obtained and water were put into an autoclave, and heated at 170 °C for 24 hours so as to add a hydroxyl group to the fine pore surfaces of the porous membrane (hydrothermal treatment).

Next, the silica porous membrane was impregnated with a 5 % toluene solution of 1,3-propanesultone and flowed back at 170 °C for 24 hours so as to introduce a sulfonic acid group into the fine pore surfaces of the silica porous membrane. In such a way, a concentration of the sulfonic acid group could be 0.7 mmol/g per unit weight of the silica porous membrane. In addition, EW value was 14200 g/mol.

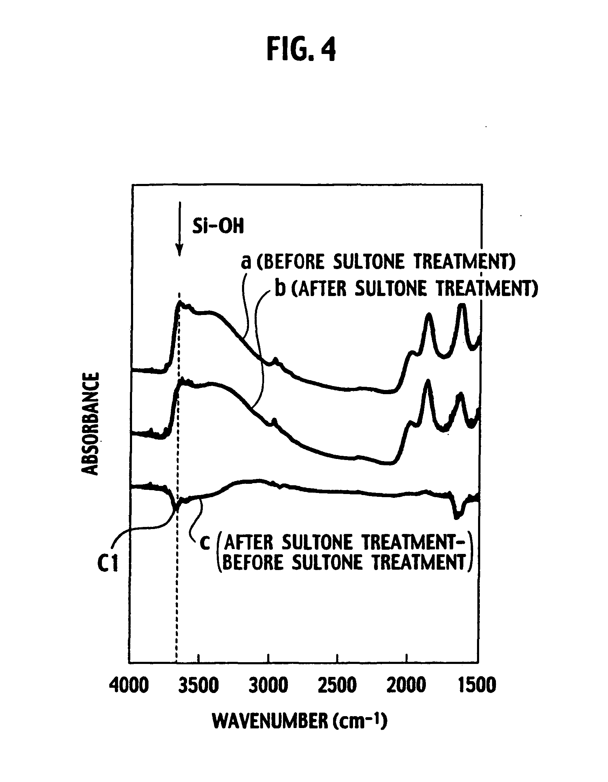

An introduction of a silanol group (SiOH group) can be measured and confirmed by using a Fourier transform infrared spectrophotometer (FT-IR). Specifically, peaks derived from the SiOH group, which are seen in a wavenumber range of approximately 3500 to 3700 cm⁻¹, are detected so that the introduction of the SiOH group can be confirmed. The measuring example is shown in FIG. 4.

Also, the reaction of the SiOH group and the sultone can be measured and confirmed by using the FT-IR. In FIG. 4, a segment a shows an IR spectrum of the surface of the porous film before the reaction with 1,3-propanesultone, a segment b shows an IR spectrum of the surface of the porous film after the reaction, and a segment c shows a difference obtained by subtracting the IR spectrum before the reaction from the IR spectrum after the reaction. From c1 of FIG. 4, it was observed that absorbance at the peak derived from the SiOH group was reduced, and therefore, it was found that the SiOH group was reduced. A reaction of the SiOH group and the sultone was advanced instead.

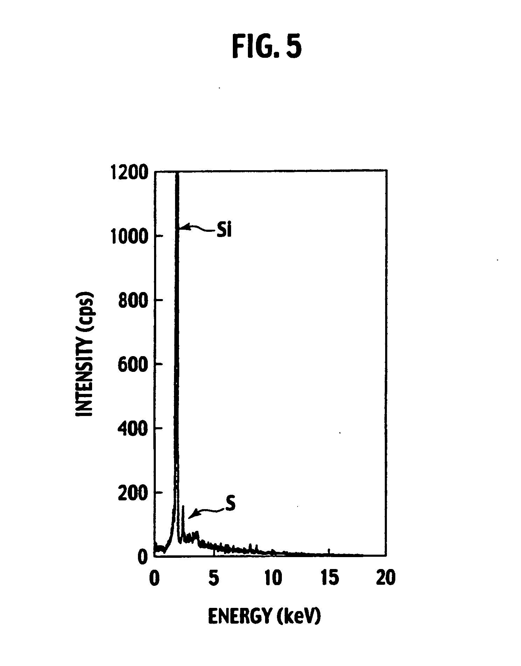

In addition, the introduced sulfonic acid group (SO₃H group) can be confirmed by an element ratio of S with respect to Si obtained by an energy dispersive X-ray spectroscopy method (EDS method) as shown in FIG. 5.

### 3. Impregnation of electrolyte material (ionic liquid)

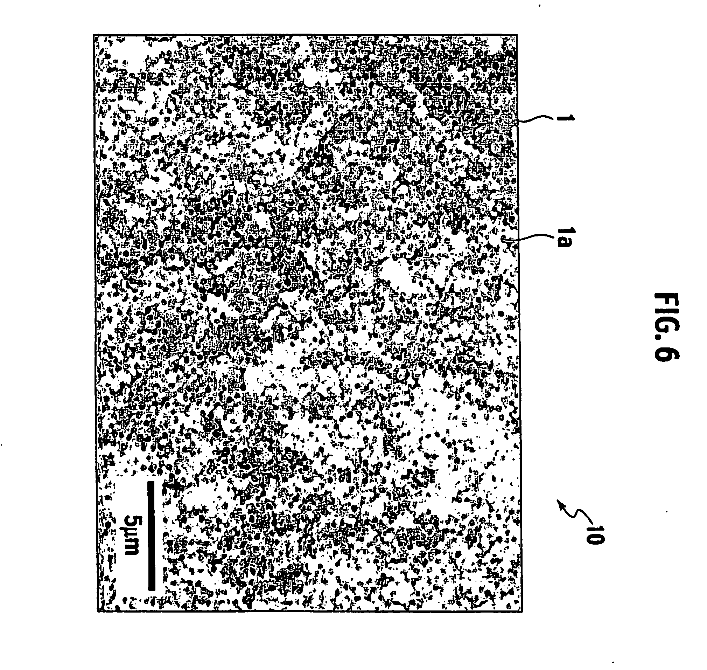

The silica porous membrane of which the fine pore surfaces were modified by the SO₃H group was impregnated with BMImTFSI (Butylmethylimidazolium bis (trifluoromethanesulfonyl) imide), PP13TFSI (N-methyl-N-propylpiperidinium bis (trifluoromethanesulfonyl) imide), TMPATFSI (N, N, N-Trimethyl-propylammonium bis (trifluoromethanesulfonyl) imide), DEMETFSI (N, N-diethyl-N-methyl-N-(2-methoxyethyl) ammonium bis (trifluoromethanesulfonyl) imide) and DEMEBF₄ (N, N-diethyl-N-methyl-N-(2-methoxyethyl) ammoniumtetrafluoroborate), respectively as an ionic liquid, and thus, the ion conductors in this example were obtained. These ionic liquids were fabricated by an anion-exchange method. For example, BMImTFSI was obtained by reaction of BMImBr and Lin (SO₂CF₃) in solvent (water). An SEM image of the cross section of the silica porous membrane including BMImTFSI is shown in FIG. 6 as a representative example of the obtained ion conductors.

### 4. Evaluation of ion conductivity

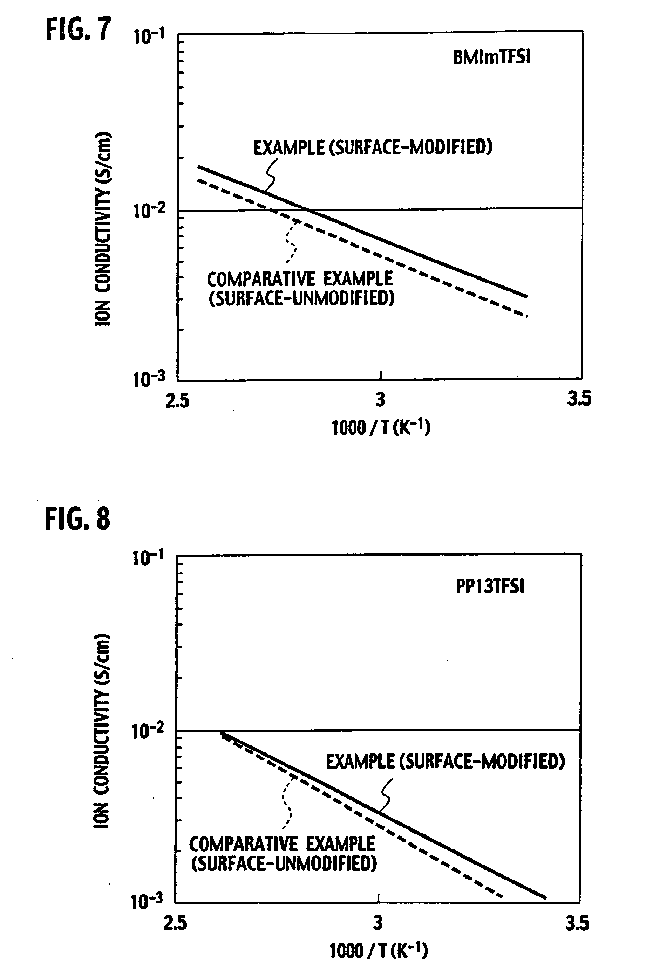

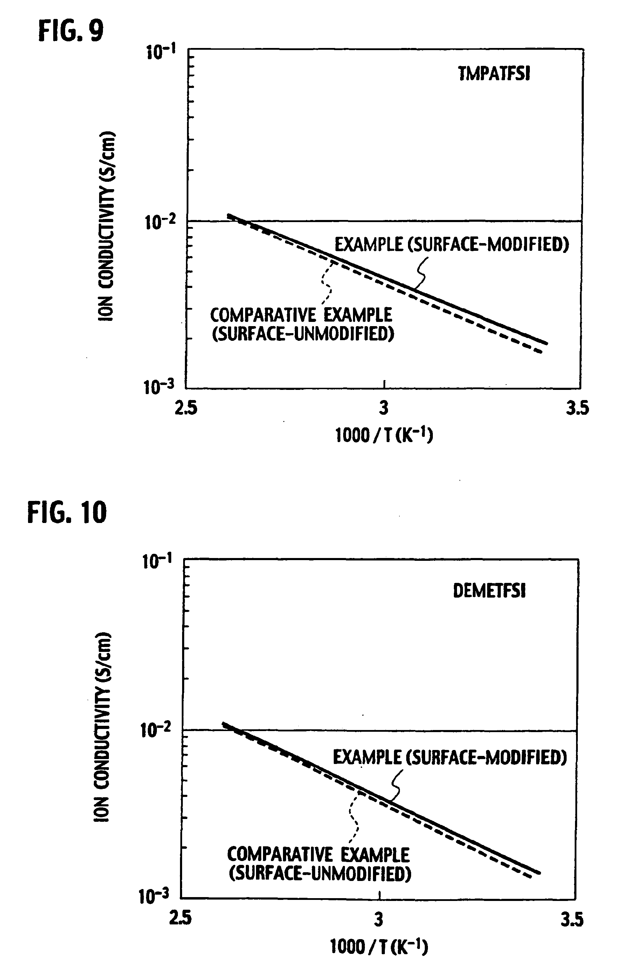

With regard to the obtained ion conductors, evaluation of the ion conductivity was performed by impedance measured in such a manner that the sample was sandwiched by metal electrodes with a predetermined area (1 cm²) from both surfaces thereof, and that an alternating voltage wave with a frequency of 100 Hz to 100 kHz was applied to the sample. Then, the results of the obtained ion conductors were compared to the cases (comparative examples) that the same silica porous membrane was impregnated with each of the above-mentioned ionic liquids without being modified the surfaces by the SO₃H group. Each result is shown in FIG. 7 to 11, respectively. The ion conductivity in this case was calculated based on an area of the sample in contact with the metal electrodes without considering the porosity. The measurement of the ion conductivity was performed while adjusting temperature. As shown in these figures, it is recognized that the ion conductors of which the surfaces were modified result in improved ion conductivity compared to the comparative examples without being modified the surfaces.

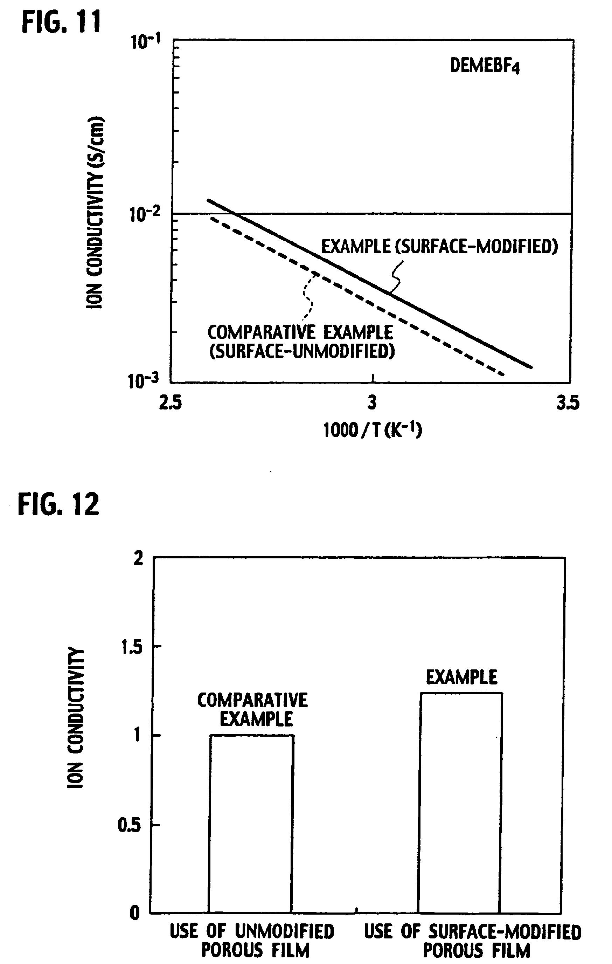

Also, FIG. 12 shows the ion conductivity of the example that the surface-modified silica porous membrane was impregnated with BMImTFSI when the ion conductivity of the comparative example that the surface-unmodified silica porous membrane was impregnated with BMImTFSI is 1. As shown in FIG. 12, it is recognized that the ion conductivity has improved 1.25 times by modifying the surfaces by the SO₃H group.

### (Example 2)

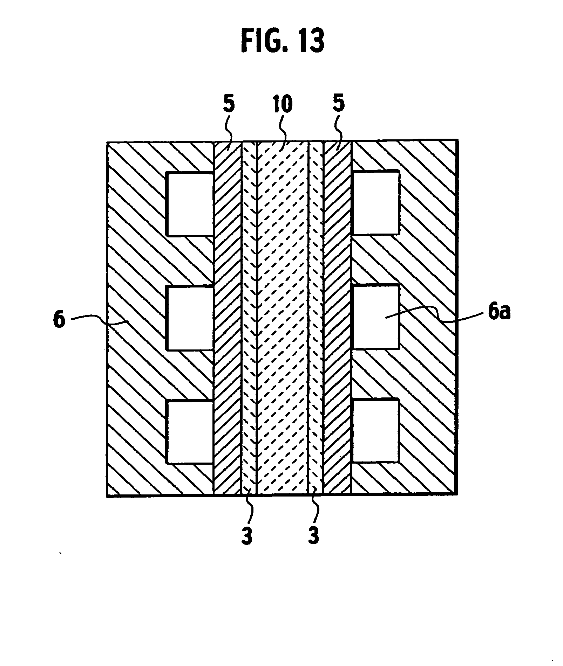

FIG. 13 shows a fundamental structure of an energy device (fuel cell) applied the ion conductor. The fuel cell (cell) is composed of the electrolyte membrane 10 (ion conductor) including the electrolyte material 2 and formed of the inorganic porous film 1, and pairs of electrodes 3 and gas diffusion layers 5 sandwiching the electrolyte membrane 10 in order. In this case, the silica porous membrane as the inorganic porous film 1, BMImTFSI as the electrolyte material 2, platinum-supported carbon as the electrode 3, and carbon paper as the gas diffusion layer 5 were used, respectively. Each electrode is provided with gas passages 6a using separators 6 so as to be able to supply hydrogen (or fuel gas including hydrogen) and oxygen (or oxidation gas including oxygen). With regard to the electrodes, one side supplying the fuel gas is an anode, and the other side supplying the oxidation gas is a cathode.

At the power generation from the fuel cell, each gas is supplied to the electrodes 3 from the gas passages 6a via the gas diffusion layers 5, and the following electrochemical reactions proceed.

H₂ → 2H⁺ + 2e⁻ (1)

2H⁺ + 2e⁻ + (1/2)O₂ → H₂O (2)

H₂ + (1/2)O₂ → H₂O (3)

Chemical formula (1) represents the reaction at the cathode side of the fuel cell, and Chemical formula (2) represents the reaction at the anode side of the fuel cell. Also, Chemical formula (3) is the reaction undergoing in the fuel cell as a whole. These reactions proceed in the electrodes 3. Thus, the fuel cell applied the ion conductor enables chemical energy that the fuel has to directly convert into electrical energy. Therefore, high-energy exchange efficiency can be expected.

The entire contents of Japanese Patent Applications No. P2006-141503 with a filing date of May 22, 2006 and No. P2007-108143 with a filing date of April 17, 2007 are herein incorporated by reference. The description has been made above of the contents of the present invention along the embodiments and the examples; however, the present invention is not limited to the description of these embodiments and examples, and for those skilled in the art, it is self-obvious that a variety of modifications and improvements are possible.

### INDUSTRIAL APPLICABILITY

According to the present invention, the ion conductor is composed of the inorganic porous film and the electrolyte material held in the fine pores, in which the inorganic porous film includes the proton-donor functional groups on the fine pore surfaces thereof, and the electrolyte material includes the cation component and the anion component. Therefore, the ion conductivity is improved compared to that of the ionic liquid by itself. Furthermore, the ion conductor has high heat resistance, and is capable of suppressing swelling during water absorption and being produced at low cost.

## Claims

1. An ion conductor, comprising:
an inorganic porous film (1) which includes multiple fine pores (1a) of which surfaces (1b) are bonded to multiple proton-donor functional groups; and
an electrolyte material (2) which is held in the fine pores (1a) of the inorganic porous film (1), and includes a cation component and an anion component.

2. The ion conductor according to claim 1, wherein the electrolyte material (2) is an ionic liquid.

3. The ion conductor according to claim 1, wherein the inorganic porous film (1) is composed of at least one metal oxide selected from the group consisting of alumina, silica, titania, and zirconia.

4. The ion conductor according to claim 1, wherein the multiple fine pores (1a) of the inorganic porous film (1) are spherical in shape having an substantially uniform diameter and three-dimensionally arranged in the inorganic porous film (1), and the multiple fine pores (1a) communicate with each other via communicating ports (4) formed between the adjacent fine pores (1a).

5. The ion conductor according to claim 4, wherein the diameter of the spherical fine pores (1a) is within a range from 20 to 1000 nm.

6. The ion conductor according to claim 4, wherein the diameter of the spherical fine pores (1a) is within a range from 50 to 500 nm.

7. The ion conductor according to claim 1, wherein a porosity of the inorganic porous film (1) is within a range from 70 to 90 % by volume.

8. The ion conductor according to claim 1, wherein the inorganic porous film (1) is composed of an inorganic sol.

9. The ion conductor according to claim 8, wherein a material that forms the inorganic sol is an inorganic colloid.

10. The ion conductor according to claim 1, wherein the inorganic porous film (1) is composed of a suspension formed by mixing polymer particles and an inorganic material.

11. The ion conductor according to claim 1, wherein the proton-donor functional group is a Brønsted acid functional group.

12. The ion conductor according to claim 11, wherein the Brønsted acid functional group is a sulfonic acid group, a phosphoric acid group, or a carboxylic acid group.

13. The ion conductor according to claim 11, wherein a concentration of the proton-donor functional group contained in the inorganic porous film (1) is within a range from 0.01 to 2.8 mmol/g per unit weight of the inorganic porous film (1).

14. The ion conductor according to claim 12, wherein an EW value of the inorganic porous film (1) is within a range from 200 to 90000 g/mol.

15. A method of producing an ion conductor, comprising:
mixing and agitating an inorganic sol, polymer particles, and a solvent;
filtering a mixed liquid including the inorganic sol, the polymer particles, and the solvent to fabricate a membrane including the inorganic sol and the polymer particles;
removing an extra solvent contained in the membrane formed by filtering, followed by drying the membrane;
firing the dried membrane and removing the polymer particles to form an inorganic porous film;
chemically modifying to introduce proton-donor functional groups onto surfaces (1b) of fine pores (1a) of the inorganic porous film (1); and
impregnating the fine pores (1a) of the inorganic porous film (1) introduced the proton-donor functional groups with an electrolyte material (2) including a cation component and an anion component, followed by drying the inorganic porous film (1).

16. The method of producing an ion conductor according to claim 15, wherein the chemically modifying comprises: treating the inorganic porous film (1) with a hydrothermal treatment to add a hydroxyl group; reacting the hydroxyl group with a composite including a mercapto group to introduce the mercapto group onto the surfaces (1b) of the fine pores (1a) of the inorganic porous film (1); and oxidizing the mercapto group to form a sulfonic acid group.

17. The method of producing an ion conductor according to claim 15, wherein the chemically modifying comprises: treating the inorganic porous film (1) with a hydrothermal treatment to add a hydroxyl group; and impregnating the inorganic porous film (1) added the hydroxyl group with a toluene solution including 1,3-propanesultone to flow back the inorganic porous film (1).

18. An energy device comprising:
the ion conductor according to claim 1.

19. A fuel cell comprising:
the ion conductor according to claim 1.

## Patentansprüche

1. Ionenleiter:
- mit einem anorganischen porösen Film (1), der mehrere feine Poren (1a) umfasst, deren Oberflächen (1b) mit mehreren Protonendonator-Funktionsgruppen verbunden sind, und
- mit einem elektrolytischen Material (2), das in den feinen Poren (1a) des anorganischen porösen Films (1) gehalten wird, und eine Kationenkomponente und eine Anionenkomponente umfasst.

2. Ionenleiter gemäß Anspruch 1, wobei das elektrolytische Material (2) eine ionische Flüssigkeit ist.

3. Ionenleiter gemäß Anspruch 1, wobei der anorganische poröse Film (1) aus zumindest einem Metalloxid, das aus der Gruppe ausgewählt ist, die aus Aluminium, Kieselerde, Titania und Zirconia besteht, zusammengesetzt ist.

4. Ionenleiter gemäß Anspruch 1, wobei die mehreren feinen Poren (1a) des anorganischen porösen Films (1) kugelförmig sind, die einen im Wesentlichen einheitlichen Durchmesser aufweisen, und dreidimensional im anorganischen porösen Film (1) angeordnet sind, und die mehreren feinen Poren (1a) miteinander über Kommunikationsanschlüsse (4) kommunizieren, die zwischen den benachbarten feinen Poren (1a) ausgebildet sind.

5. Ionenleiter gemäß Anspruch 4, wobei der Durchmesser der kugelförmigen feinen Poren (1a) innerhalb eines Bereichs von 20 bis 1000 mm liegt.

6. Ionenleiter gemäß Anspruch 4, wobei der Durchmesser der kugelförmigen feinen Poren (1a) innerhalb eines Bereichs von 50 bis 500 nm liegt.

7. Ionenleiter gemäß Anspruch 1, wobei eine Porosität des anorganischen porösen Films (1) innerhalb eines Bereichs von 70 bis 90 Vol.-% liegt.

8. Ionenleiter gemäß Anspruch 1, wobei der anorganische poröse Film (1) aus einem anorganischen Sol besteht.

9. Ionenleiter gemäß Anspruch 8, wobei ein Material, das das anorganische Sol bildet, ein anorganisches Kolloid ist.

10. Ionenleiter gemäß Anspruch 1, wobei der anorganische poröse Film (1) aus einer Suspension besteht, die durch Mischen von Polymerteilchen und einem anorganischen Material gebildet wird.

11. Ionenleiter gemäß Anspruch 1, wobei die Protonendonator-Funktionsgruppe eine Brönstedsäure-Funktionsgruppe ist.

12. Ionenleiter gemäß Anspruch 11, wobei die Brönstedsäure-Funktionsgruppe eine Sulphonsäuregruppe, eine Phosphorsäuregruppe oder eine Carbonsäuregruppe ist.

13. Ionenleiter gemäß Anspruch 11, wobei eine Konzentration der Protonendonator-Funktionsgruppe, die im anorganischen porösen Film (1) enthalten ist, innerhalb eines Bereichs von 0,01 bis 2,8 mmol/g pro Gewichtseinheit des anorganischen porösen Films (1) liegt.

14. Ionenleiter gemäß Anspruch 12, wobei ein EW-(Äquivalentmasse)-Wert des anorganischen porösen Films (1) innerhalb eines Bereichs von 200 bis 90000 g/mol liegt.

15. Verfahren zum Herstellen eines Ionenleiters, aufweisend:
- Mischen und Rühren eines anorganischen Sols, von Polymerteilchen und eines Lösungsmittels;
- Filtern einer gemischten Flüssigkeit mit dem anorganischen Sol, den Polymerteilchen und dem Lösungsmittel, um eine Membran mit dem anorganischen Sol und den Polymerteilchen herzustellen;
- Entfernen eines zusätzlichen Lösungsmittels, das in der Membran enthalten ist, die durch Filtern und anschließendem Trocknen der Membran ausgebildet wird;
- Brennen der getrockneten Membran und Entfernen der Polymerteilchen, um einen anorganischen porösen Film zu bilden;
- chemisches Modifizieren, um die Protonendonator-Funktionsgruppen auf den Oberflächen (1 b) der feinen Poren (1a) des anorganischen porösen Films (1) aufzubringen; und
- Imprägnieren der feinen Poren (1a) des anorganischen porösen Films (1), wobei die Protonendonator-Funktionsgruppen mit einem elektrolytischen Material (2) mit einer Kationenkomponente und einer Anionenkomponente aufgebracht werden, gefolgt durch das Trocknen des anorganischen porösen Films (1).

16. Verfahren zum Herstellen eines Ionenleiters gemäß Anspruch 15, wobei das chemische Modifizieren aufweist:
- Behandeln des anorganischen porösen Films (1) mit einer hydrothermalen Behandlung, um eine Hydroxylgruppe hinzuzufügen;
- Reagieren der Hydroxylgruppe mit einem Komposit mit einer Mercapto-Gruppe, um die Mercapto-Gruppe auf die Oberflächen (1b) der feinen Poren (1a) des anorganischen porösen Films (1) aufzubringen; und
- Oxidieren der Mercapto-Gruppe, um eine Sulphonsäuregruppe zu bilden.

17. Verfahren zum Herstellen eines Ionenleiters gemäß Anspruch 15, wobei das chemische Modifizieren aufweist:
- Behandeln des anorganischen porösen Films (1) mit einer hydrothermischen Behandlung, um eine Hydroxylgruppe hinzuzufügen; und
- Imprägnieren des anorganischen porösen Films (1), dem die Hydroxylgruppe hinzugefügt wurde, mit einer Toluol-Lösung mit 1,3-Propansulton, um den anorganischen porösen Film (1) zurückfließen zu lassen.

18. Energievorrichtung, aufweisend:
- den Ionenleiter gemäß Anspruch 1.

19. Brennstoffzelle, aufweisend:
- den Ionenleiter gemäß Anspruch 1.

## Revendications

1. Conducteur d'ions comprenant :
un film poreux inorganique (1) qui contient de multiples pores fins (1a) dont les surfaces (1 b) sont liées à de multiples groupes fonctionnels donneurs de protons ; et
un matériau d'électrolyte (2) qui est retenu dans les pores fins (1a) du film poreux inorganique (1), et contient un composant cation et un composant anion.

2. Conducteur d'ions selon la revendication 1, dans lequel le matériau d'électrolyte (2) est un liquide ionique.

3. Conducteur d'ions selon la revendication 1, dans lequel le film poreux inorganique (1) est composé d'au moins un oxyde métallique choisi dans le groupe constitué par l'alumine, la silice, l'oxyde de titane, et la zircone.

4. Conducteur d'ions selon la revendication 1, dans lequel les multiples pores fins (1a) du film poreux inorganique (1) ont une forme sphérique ayant un diamètre sensiblement uniforme et sont agencés de manière tridimensionnelle dans le film poreux inorganique (1), et les multiples pores fins (1a) communiquent entre eux via des orifices de communication (4) formés entre les pores fins adjacents (1a).

5. Conducteur d'ions selon la revendication 4, dans lequel le diamètre des pores fins sphériques (1a) est situé dans la plage allant de 20 à 1000 nm.

6. Conducteur d'ions selon la revendication 4, dans lequel le diamètre des pores fins sphériques (1a) est situé dans la plage allant de 50 à 500 nm.

7. Conducteur d'ions selon la revendication 1, dans lequel la porosité du film poreux inorganique (1) est située dans la plage allant de 70 à 90 % en volume.

8. Conducteur d'ions selon la revendication 1, dans lequel le film poreux inorganique (1) est composé d'un sol inorganique.

9. Conducteur d'ions selon la revendication 8, dans lequel un matériau qui forme le sol inorganique est un colloïde inorganique.

10. Conducteur d'ions selon la revendication 1, dans lequel le film poreux inorganique (1) est composé d'une suspension formée par mélange de particules de polymère et d'un matériau inorganique.

11. Conducteur d'ions selon la revendication 1, dans lequel le groupe fonctionnel donneur de protons est un groupe fonctionnel acide de Brønsted.

12. Conducteur d'ions selon la revendication 11, dans lequel le groupe fonctionnel acide de Brønsted est un groupe acide sulfonique, un groupe acide phosphorique, ou un groupe acide carboxylique.

13. Conducteur d'ions selon la revendication 11, dans lequel la concentration du groupe fonctionnel donneur de protons contenu dans le film poreux inorganique (1) est située dans la plage allant de 0,01 à 2,8 mmol/g par unité de poids du film poreux inorganique (1).

14. Conducteur d'ions selon la revendication 12, dans lequel la valeur EW du film poreux inorganique (1) est située dans la plage allant de 200 à 90 000 g/mol.

15. Procédé pour produire un conducteur d'ions, comprenant :
le mélange et l'agitation d'un sol inorganique, de particules de polymère, et d'un solvant ;
la filtration d'un liquide mixte contenant le sol inorganique, les particules de polymère, et le solvant, pour fabriquer une membrane contenant le sol inorganique et les particules de polymère ;
l'élimination du solvant en excès contenu dans la membrane formée par filtration, suivie d'un séchage de la membrane ;
la calcination de la membrane séchée et l'élimination des particules de polymère pour former un film poreux inorganique ;
une modification chimique pour introduire des groupes fonctionnels donneurs de protons sur les surfaces (1 b) des pores fins (1a) du film poreux inorganique (1) ; et
l'imprégnation des pores fins (1a) du film poreux inorganique (1), dans lesquels ont été introduits les groupes fonctionnels donneurs de protons, avec un matériau d'électrolyte (2) contenant un composant cation et un composant anion, suivie d'un séchage du film poreux inorganique (1).

16. Procédé pour produire un conducteur d'ions selon la revendication 15, dans lequel la modification chimique comprend : le traitement du film poreux inorganique (1) avec un traitement hydrothermal pour ajouter un groupe hydroxyle ; la réaction du groupe hydroxyle avec un composite contenant un groupe mercapto pour introduire le groupe mercapto sur les surfaces (1 b) des pores fins (1a) du film poreux inorganique (1) ; et l'oxydation du groupe mercapto pour former un groupe acide sulfonique.

17. Procédé pour produire un conducteur d'ions selon la revendication 15, dans lequel la modification chimique comprend : le traitement du film poreux inorganique (1) avec un traitement hydrothermal pour ajouter un groupe hydroxyle ; et l'imprégnation du film poreux inorganique (1) auquel a été ajouté le groupe hydroxyle avec une solution toluénique contenant de la 1,3-propanesultone pour refluer le film poreux inorganique (1).

18. Dispositif énergétique comprenant le conducteur d'ions selon la revendication 1.

19. Pile à combustible comprenant le conducteur d'ions selon la revendication 1.
